# EUROPEAN PATENT APPLICATION

(11) **EP 0 590 154 A1**
(43) Date of publication of application: **06.04.1994**
(21) Application number: 93905636.2
(22) Date of filing: 11.03.1993
(51) Int. Cl.: G05B 19/405

(54) **METHOD OF CREATING OPERATIVE PROGRAM AND METHOD OF EXECUTING THE SAME**

(30) Priority: 16.03.1992 JP 58124/92
(71) Applicant: FANUC LTD., Minamitsuru-gun, Yamanashi 401-05 (JP)
(72) Inventor: WATANABE, Atsushi, Fanuc Mansion Harimomi 7-207, Minamitsuru-gun, Yamanashi 401-05 (JP); ITO, Takayuki, Fanuc Dai-3 Villa-karamatsu, Minamitsuru-gun, Yamanashi 401-05 (JP); TAKAHASHI, Hiromitsu, Fanuc Dai-3 Vira-karamatsu, Minamitsuru-gun, Yamanashi 401-05 (JP)
(74) Representative: Brunner, Michael John
(86) International application number: JP9300302
(87) International publication number: WO9319407

(57) **Abstract**

A method of creating an operation program easy to understand, and of executing the operation program simply. When creating a program (20), in addition to such ordinary operative statements as "each axis position [1] 100 % alignment", macro names are used. For example, in the fifth line a macro name "hand close" is used, and in the tenth line a macro name "hand open" is used. According to macro programs fetched under such macro names, a robot (100) performs the opening and closing operations of a robot hand (102). In this manner, macro programs are given macro names representing their uses, etc., and an operation program is created using the macro names. Therefore, the creation of the program (20) is easy for the creator. The operation program (20) is easy for the operator to understand at a glance.

## Description

### Technical Field

The present invention relates to a method of generating and a method of executing an operation program for a robot, and more particularly to a method of generating an operation program which can readily be understood and a method of executing an operation program which can readily be executed.

### Background Art

Operation programs for robots should preferably be of such a nature that they can readily be understood at first sight by programmers and program users. To meet such a requirement, it is customary to assign the name of a program to each of subprograms thereof, and call the subprograms and effect a teaching process with the program name. The name of a program is limited to a certain number of characters and a format. For example, the number of characters that can be used is up to eight, with no blank permitted.

Accordingly, a program cannot freely be named, but the name of a program tends to be cryptic. It is not possible to know the purpose and function of a subprogram from the program name, and hence the contents of the program cannot be grasped at first sight. As a result, an operation program generated using a program name may not be a program that can readily be understood.

A subprogram that is allotted the name of a program often finds frequent usage. When the subprogram is executed on a robot manually, the subprogram needs to be called each time it is executed. Therefore, operation based on the subprogram cannot simply be carried out.

### Disclosure of the Invention

In view of the above problems of the conventional practice, it is an object of the present invention to provide a method of generating an operation program which can readily be understood.

Another object of the present invention is to provide a method of executing an operation program which can readily be executed.

To achieve the above objects, there is provided in accordance with the present invention a method of generating an operation program for a robot, comprising the steps of establishing a subname for a macro program, and generating an operation program using the subname.

There is also provided in accordance with the present invention a method of executing an operation program for a robot, comprising the steps of establishing a subname for a macro program, allocating the subname to an execution command means, and controlling the execution command means to execute the macro program.

A subname indicative of the purpose and function of a macro program is established and registered. A macro program is a program for instructing a robot to carry out an operation. For example, a subname such as "OPEN HAND" is established and registered for a macro program which instructs the robot to open a robot hand. In generating an operation program, the subname is used to call the macro program, and the operation program is taught the called macro program. Since an operation program is generated using a subname that allows the contents of a corresponding macro program to be grasped at first sight, it is possible to generate the operation program that can easily be understood by the programmer and user.

The subname of a macro program is established and registered, and allocated to an execution command means such as a user key on a teach pendant or a user button on an operator panel, for example. The operation based on the macro program can be manually effected by a robot simply by operating the execution command means. Therefore, the operation based on the macro program can be carried out through a simple procedure.

### Brief Description of the Drawings

FIG. 1 is a view showing, by way of example, an operation program generated using macro names;
FIG. 2 is a block diagram illustrative of a macro program;
FIG. 3 is a view showing the manner in which a macro name is registered;
FIG. 4(A) is a view showing the manner in which a macro name is allocated to a user key;
FIG. 4(B) is a view showing the manner in which a macro name is allocated to a user button;
FIG. 5 is a view showing the manner in which a macro name is allocated to a manual function menu; and
FIG. 6 is a block diagram of a robot control system.

### Best Mode for Carrying Out the Invention

An embodiment of the present invention will hereinafter be described below with reference to the drawings.

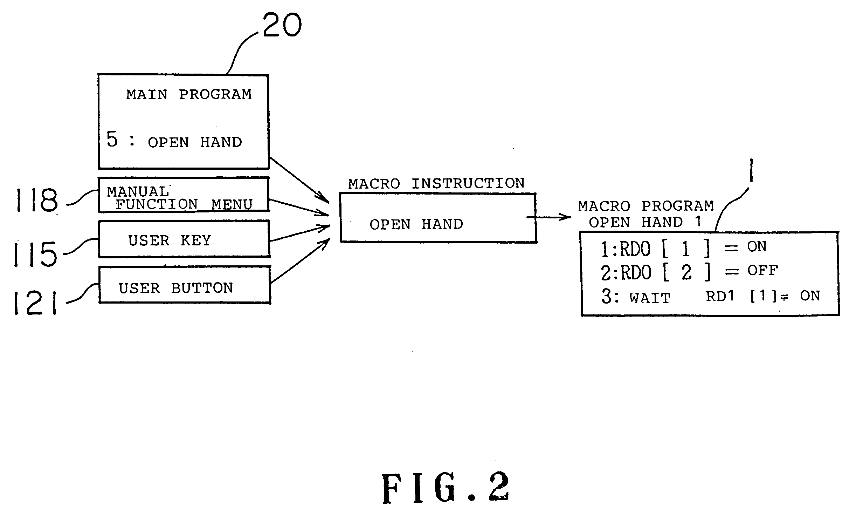

FIG. 2 is illustrative of a macro program. A macro program is a subprogram for instructing a robot to carry out an operation. The macro program, denoted at 1, commands an operation to open a robot hand, and is composed of three lines of instructions. A subname (macro name) "OPEN HAND", for example, is established and registered for the macro program 1. The macro name "OPEN HAND" is used in a main program (operation program) 20, and allocated to an item in a manual function menu 118, a user key 115, or a user button 121. As a result, depending on the operation of the operator, a macro command "OPEN HAND" is applied from the operation program 20, the manual function menu 118, the user key 115, or the user button 121 to the robot. Details of such a process will be described later on.

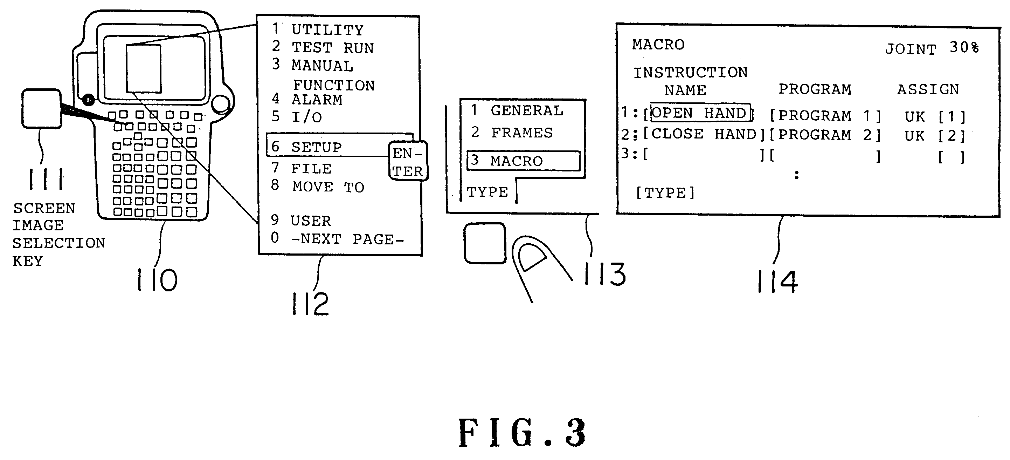

FIG. 3 shows the manner in which a macro name is registered. A teach pendant 110 has a screen image selection key 111, which is pressed to display a selection screen image 112. When a sixth item "SETUP" in the selection screen image 112 is selected, another selection screen image 113 is displayed. When a third item "MACRO" in the selection screen image 113 is selected, a registration screen image 114 is displayed. In the registration screen image 114, the macro name "OPEN HAND" is registered with respect to the macro program 1 which is a sequence of instructions to open the robot hand. It is possible to input up to 16 characters for use as the macro name. While only a cryptic macro name such as "AAA" for the macro program 1 can heretofore be registered due to the limited number of characters and the limited format, a name representing the purpose or function of a program can be registered as a macro name according to the present invention.

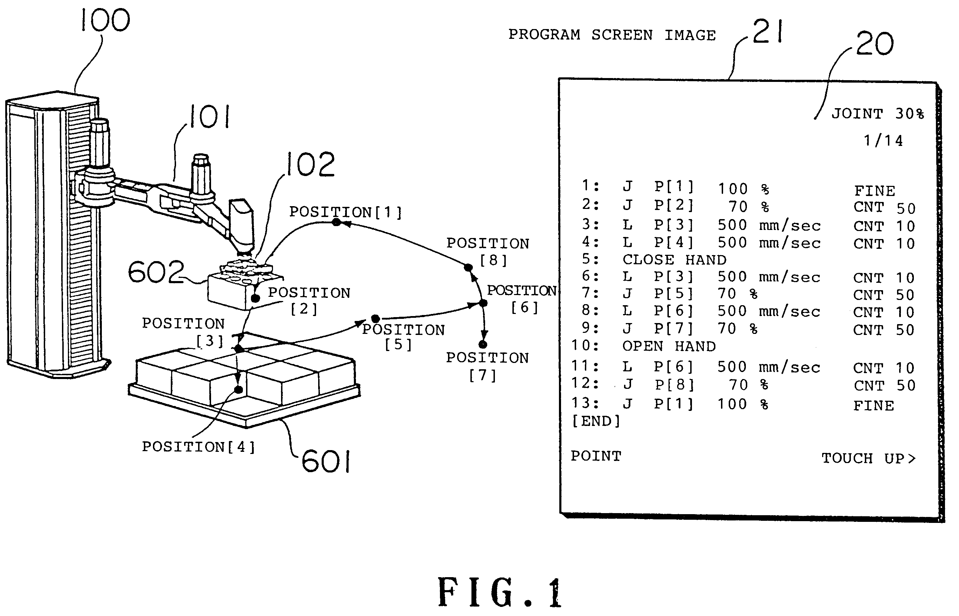

FIG. 1 shows, by way of example, an operation program generated using macro names. In FIG. 1, the program 20 displayed in a program screen image 21 is an operation program for enabling a robot 100 to carry out a certain operation. Based on the program 20, a robot hand 102 on the tip end of an arm 101 of the robot 100 effects a series of movements from a position [1] through a position [3], a position [6], etc. back to the position [1] to place a workpiece 602 on a pallet 601. The operation program includes not only a program for operating the robot but also a program for outputting signals to an external device.

In generating the program 20, macro names are used in addition to ordinary operation sentences such as "J P [1] 100 % FINE". For example, a macro name "CLOSE HAND" is used in the 5th line and the macro name "OPEN HAND" is used in the 10th line. The robot 100 opens and closes a robot hand 102 based on the macro programs that are called with these macro names. Since the macro names assigned to the macro programs are indicative of purposes or functions and the operation program is generated using the macro names, the programmer finds it easy to generate the program 20, and the operator can readily understand the program 20 at first sight.

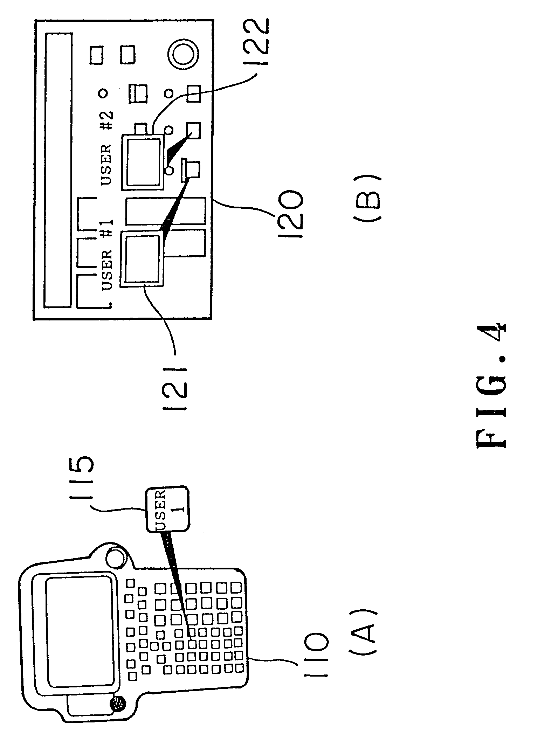

FIG. 4(A) shows the manner in which a macro name is allocated to a user key, and FIG. 4(B) shows the manner in which a macro name is allocated to a user button. In FIG. 4(A), a key 115 on the teach pendant 110 is a user key that can freely be used by the user. The teach pendant 110 has about seven keys, for example, reserved as user keys. When a macro name is established and registered, the macro name is allocated to the user key 115. Like the registration of a macro key, the allocation of the macro name to the user key 115 is registered on the registration screen image 114 shown in FIG. 3. On the registration screen image 114 shown in FIG. 3, the macro name "OPEN HAND", for example, is allocated to UK [1] as indicated in an allocation column on the right-hand end in FIG. 3. The characters "UK" represents a user key on the teach Pendant 110, and the characters "UK [1]" corresponds to the key 115 shown in FIG. 4(A).

A macro name can also be allocated to two user buttons 121, 122 on an operator panel 120 of a robot control system as shown in FIG. 4(B). Like the registration of the allocation of the macro name to the user key 115 mentioned above, the allocation of the macro name to the user buttons 121, 122 is registered on the registration screen image 114 shown in FIG. 3. For allocating the macro name to the user buttons 121, 122, characters "SP" that indicate the user button 121 are used in place of the characters "UK" that indicate the user key 115 in the allocation column in the registration screen image 114.

Since a macro name is allocated to the user key 115 or the user button 121, the robot 100 can be controlled to operate according to a macro program corresponding to the user key 115 or the user button 121 simply by pressing the user key 115 or the user button 121. Therefore, macro instructions can be executed by a simple manual procedure.

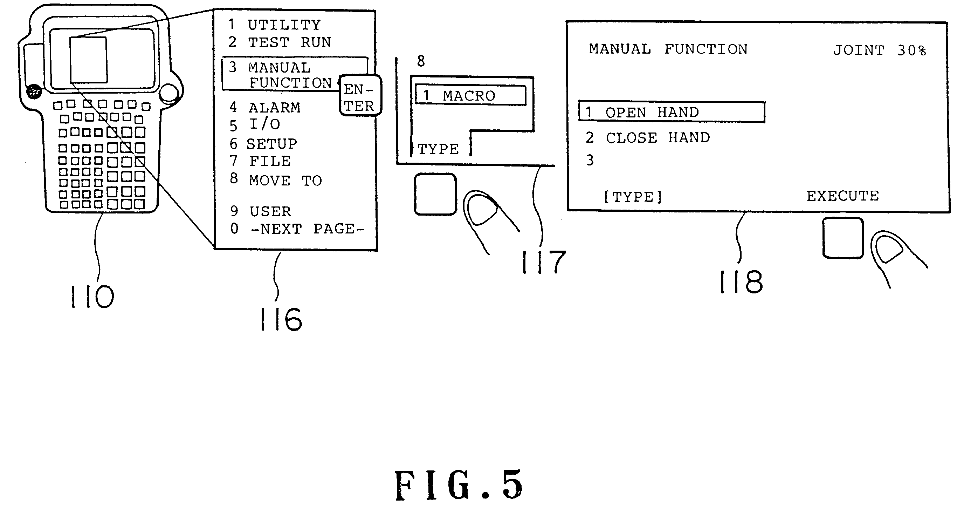

FIG. 5 shows the manner in which a macro name is allocated to a manual function menu. In FIG. 5, when an item "MANUAL FUNCTION" on a selection screen image 116 displayed on the teach pendant 110 is selected, a screen image 117 is displayed. When an item "MACRO" on the screen image 117 is selected, a manual function screen image (manual function menu) 118 is displayed. The manual function screen image 118 includes items that have already been allotted respective macro names. The allocation of the macro names is registered on the registration screen image 114 shown in FIG. 3 as with the above-described registration of allocation of a macro name to the user key 115 or the user button 121. For the allocation of the macro names, characters "MF" indicative of the items on the manual function screen image 118 are used in place of the characters "UK" that indicate the user key 115 in the allocation column in the registration screen image 114. When the allocation of a macro name on the manual function screen image 118 is registered, the registered macro name is displayed at an item on the manual function screen image 118. When the robot 100 is to be operated, the operator is only required to designate a macro name among the items on the manual function screen image 118. Therefore, macro instructions can be executed by a simple manual procedure.

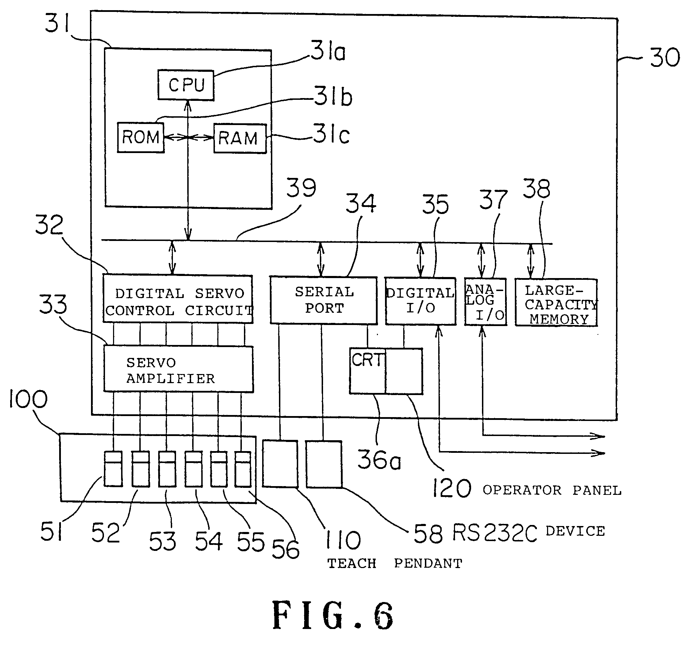

FIG. 6 shows in block form a robot control system. The robot control system, denoted at 30, includes a processor board 31 having a processor 31a, a ROM 31b, and a RAM 31c. The processor 31a controls the robot control system 30 as a whole according to a system program stored in the ROM 31b. The RAM 31c stores various data and also an operation program for the robot 100 and a program for establishing and registering macro names. The RAM 31c has a portion constructed as a non-volatile memory which stores the operation program and other programs. The processor board 31 is connected to a bus 39.

A digital servo control circuit 32 is connected to the bus 39, and energizes servo motors 51, 52, 53, 54, 55, 56 through a servo amplifier 33 according to commands from the processor board 31. These servo motors are mounted on the robot 100 for actuating the robot about respective axes.

A serial port 34 is connected to the bus 39, and also to the teach pendant 110 and an RS232C device 58. Macro names are allocated to user keys 115, etc. of the teach pendant 110. The teach pendant 110 has a display screen for displaying the manual function screen image 118 with macro names assigned to respective items.

A CRT 36a is connected to the serial port 34. The operator panel 120 is connected to a digital I/O 35. The operator panel 120 has user buttons 121, etc. to which macro names are allocated.

With the present invention, as described above, a subname indicative of the purpose and function of a macro program is established and registered. When an operation program is generated, the macro program is called using the subname, and the operation program is taught the called macro program. Since the subname allows the macro program to be grasped at first sight, it is possible to generate the operation program that can readily be understood by the programmer and the user.

Sub names are allocated to user buttons and respective items on a screen image. Consequently, simply by pressing a user button to which a subname is allocated, the robot is controlled to effect an operation indicated by the corresponding macro program. The operation of a macro program can be carried out simply by designating the necessary subname among the items on the screen image. Therefore, the operation of a macro program can be carried out by a simple manual procedure.

## Claims

1. A method of generating an operation program for a robot, comprising the steps of:
establishing a subname for a macro program; and
generating an operation program using said subname.

2. A method of executing an operation program for a robot, comprising the steps of:
establishing a subname for a macro program;
allocating said subname to an execution command means; and
controlling said execution command means to execute said macro program.

3. A method of executing an operation program according to claim 2, wherein said execution command means comprises a user key on a teach pendant.

4. A method of executing an operation program according to claim 2, wherein said execution command means comprises a user button on an operator panel.

5. A method of executing an operation program according to claim 2, wherein said execution command means comprises a manual function menu on a manual function screen image.
